(19) Europäisches Patentamt
European Patent Office
Office européen des brevets

(11) **EP 1 128 563 A1**

(12) **EUROPEAN PATENT APPLICATION**

(43) Date of publication:
**29.08.2001 Bulletin 2001/35**

(51) Int Cl.7: **H04B 1/707**

(21) Application number: **00103984.1**

(22) Date of filing: **25.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Sony International (Europe) GmbH 50829 Köln (DE)**

(72) Inventor: **Elders-Boll, Harald, c/o Sony Intern.(Europe) GmbH 70736 Fellbach (DE)**

(74) Representative: **Körber, Martin, Dipl.-Phys. et al Mitscherlich & Partner Patentanwälte Sonnenstrasse 33 80331 München (DE)**

(54) **Receiver structure for a wireless communication device**

(57) The present invention relates to a receiver structure (1) for a wireless communication device and a processing method for processing a received bit stream in a wireless communication device. The receiver structure (1) according to the present invention comprises a correlation means (8) for correlating a received bit stream and for obtaining a delay profile of said received bit stream, selecting means (9) for selecting at least one multipath component from said received bit stream on the basis of the obtained delay profile and for assigning each selected multipath component to a respective one of a number of receiver paths (6a to 6l), in which the multipath components are further processed, and combining means (7) for combining the processed multipath components output from said receiver path. The selecting means (9) selects the number of multipath components on the basis of a threshold value calculated from the delay profile, whereby the threshold value is calculated on the basis of a mean value of the entire delay profile.

The present invention allows for a more effective calculation of the threshold value and a reduced complexity of the receiver structure (1).

Fig. 1

**Description**

The present invention relates to a receiver structure for a wireless communication device and a processing method for processing a received bit stream in a wireless communication device, particularly to a CDMA (Code Division Multiple Access) receiver. The present invention particularly relates to a receiver structure and a processing method for a mobile station of a wireless telecommunication system.

In mobile communications, due to scattering and/or refraction of the transmitted signals, the signal received in a communication device normally consists of many different multipath signals. These different multipath signals are copies of the transmitted signal, which have reached the receiver through different transmission paths with different delays and amplitudes. The combination of those multipath signals which arrive at the receiver at nearly the same time, is referred to as a multipath component. Depending on their phases, multipath signals may either add up constructively or destructively. This causes rapid fluctuations of the amplitudes of the received multipath components known as fading. When the received signal amplitude is very low, the signal is said to be in a fade.

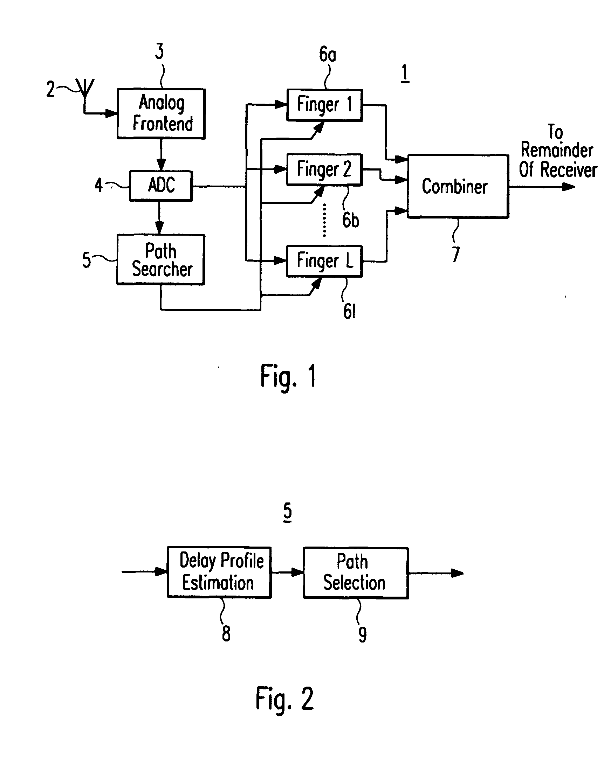

To be able to resolve and properly process the multipath components in the receiver, the bandwidth of the transmitted signal has to be larger than the bandwidth of the actual data signal. In direct sequence spread spectrum systems, like IS-95 and WCDMA, this is achieved by multiplying each data symbol with a pseudo-noise (PN) code of a higher pulse rate, the so-called chip rate. The N pulses of the PN codes are referred to as chips and their period is usually denoted by $T_c$. Spread spectrum systems can exploit the multipath components by a receiver structure known as a RAKE-receiver. The general construction of such a receiver structure is shown in figure 1. By combining different multipath components, i.e. signals from different independent multipaths, the probability that the combined signal is in a fade is significantly lower than for each of the multipath components. Thus, using such a RAKE receiver structure, in which a processing method called multipath diversity is applied, the resistence to fading can be improved significantly.

A known RAKE receiver structure for a wireless communication device, as e.g. a direct sequence WCDMA system, as shown in figure 1 e.g. comprises an antenna 2 for receiving wirelessly transmitted signals, an analog frontend 3, e.g. for downconverting the received signals into the baseband, and an analog-to-digital converter 4 for analog-to-digital converting the received and downcoverted signals into the digital bit stream. The received bit stream is supplied to a number L of parallel receiver paths or fingers 6a to 61, each of which uses a different delay to demodulate the signal from a single multipath component. The delays are initially assigned to the receiver paths 6a to 61 by a path searcher 5, to which the received and downconverted bit stream from the analog-to-digital converter 4 is also supplied. In other words, the path searcher 5 calculates the different delays used in each receiver path or finger 6a to 61 of the receiver structure. In each receiver path 6a to 61, the respective multipath component is further processed, e.g. cross-correlated or despreaded and eventually descrambled. The outputs of the receiver paths 6a to 61 are supplied to a combiner 7, e.g. by weighting each output with the receiving power of the respective mulitpath component, and then the combined signal is supplied to the remainder of the receiver, as e.g. further deinterleaving, channel decoding and other units.

In the path searcher 5, the received bit stream supplied from the analog-to-digital converter 4 is processed by measuring the delay profile, i.e. receiving power versus time of the received signal, which is then used for assigning the different delays to the different receiver paths 6a to 61. The delay profile is usually measured by cross-correlating the received baseband signal with a local copy of the PN code. The received signal and the local PN code are usually oversampled by a certain factor. In the following, oversampling by a factor of 2 is assumed. Then the delay profile can be measured at 2N discrete delays spaced by $T_c/2$, whereby each delay corresponds to one multipath component. The k-th measurement of the n-th multipath component, i.e. the multipath component with delay $nT_c/2$ is denoted by $y_k(n)$. Due to noise or interference, the disturbance of one single measurement is usually too high to permit a reliable path selection. Therefore, the actual estimate of the delay profile is usually obtained by non-coherently averaging over a number of measured instantaneous delay profiles. If this number is denoted by K, the estimate of the amplitude of the n-th mulitpath component is thus given by

$$z(n) \;=\; \frac{1}{K}\sum_{k=1}^{K}\bigl|y_k(n)\bigr|^2 \,. \qquad\qquad (1)$$

Because $y_k(n)$ is a complex Gaussian random variable, $z(n)$ is in general a non-central chi-square random variable with 2K degrees of freedom and a non-centrality parameter $|h(n)|^2$, where h(n) denotes the amplitude of the corresponding multipath component. This case is described in E. Bejjani, J.-F. Bounquier, and B. de Cacqueray, "Adaptive channel delay selection for WCDMA mobile system", Proceedings IEEE Vehicular Technology Conference (VTC' 99) Fall, Amsterdam, The Netherlands, pp. 203-207, September 1999. Therefore, the expected value of the power delay profile is given by

$$m_z = E[z(n)] = |h(n)|^2 + \sigma^2_y, \tag{2}$$

where $\sigma^2_y$ is the variance of $y_k(n)$. Thus, the non-coherent averaging causes the estimated delay profile to be biased by $\sigma^2_y$. Here, the need for a threshold becomes evident. Even if for a certain delay there is no true transmission path, i.e. $h(n)=0$, the estimated delay profile does not vanish. If the number of true transmission paths was smaller than the number of receiver paths or RAKE fingers 6a to 6l, a simple path selection rule, like simply selecting those L delays corresponding to the L highest values of the estimated delay spectrum $z(n)$, would also select delays, which do not correspond to true transmission paths between the transmitter and the receiver of the wireless communication system. However, these noise-only multipath components would not increase the power of the desired signal but only increase the noise power and thus decrease the performance. Moreover, the assignment of receiver paths or RAKE fingers 6a to 6l to noise-only paths would not only decrease the performance but also waste resources. Thus, for a maximum performance and minimum complexity an effective but simple decision rule is needed.

This is usually accomplished by selecting only those delays for which the measured delay profile exceeds a certain threshold $\vartheta$. In the state of the art cited above, this threshold is chosen to be a fraction of the power of the strongest path $z_{max}$, e.g. $\vartheta = z_{max}/\alpha$, with $\alpha$ being equal to 2 or 4 (corresponding to 3 or 6 dB). However, this method does not account for the dependency of the bias of the estimated power delay spectrum on the noise power $\sigma^2_y$. This is also true for a slightly more sophisticated threshold setting as proposed in S. Fukumoto, M. Sawahashi, and F. Adachi, "Matched filter-based RAKE combiner for wideband DS-CDMA" IEICE Trans. Comm., vol. E81-B, no. 7, pp. 1384-1390, July 1998:

$$\vartheta = \max(z_{max}/\alpha, z_{min} \times \beta) \tag{3}$$

where $z_{min}$ is the minimum of $z(n)$ and the values for $\alpha$ and $\beta$ have been determined by simulation to be equal to 5dB and 3dB, respectively. Therefore, a different threshold

$$\vartheta = m_{z,noise} + \gamma \sigma_{z,noise}, \tag{4}$$

which explicitly depends on mean noise value $m_{z,noise}$ and the standard deviation $\sigma_{z,noise}$ of the $z(n)$ corresponding to noise-only paths, was proposed in the article by E. Bejjani, J.-F. Bounquier and B. de Cacqueray as cited above.

The idea was to adjust the threshold to a value just above the bias. Since, at the receiver, it is not known which paths are noise-only, a certain number of paths, which correspond to the highest values of $z(n)$, have to be discarded first, before estimated values for $m_{z,noise}$ and $\sigma_{z,noise}$ can be calculated from the estimated power delay profile $z(n)$. The parameter $\gamma$ in equation (4) is a design parameter to be optimized by simulations. However, this threshold setting is obviously far more complex than the fixed thresholds or the threshold given by equation (3). The major problem with the threshold as proposed in equation (4) is, that $m_{z,noise}$ and $\sigma_{z,noise}$ can only be calculated after a certain number of $L_d > L$ strongest paths have been discarded from the estimated power delay profile, which means that an additional loop over all possible delays is needed, before the actual delays can be chosen. Usually, the delay corresponding to the strongest multipath component $z_{max}$ is chosen in any case in the path searcher 5 to make sure that at least one RAKE finger or receiver path 6a to 6l is assigned to a multipath component.

Depending on the actual waveform of the chip pulse, multipath components, which are closely spaced, e.g. closer than $T_c$, are more or less correlated. However, in order to achieve the maximum diversity gain, the multipath components combined in the combiner 7 of the receiver structure as shown in figure 1 should be as uncorrelated as possible. Therefore, multipath components are usually chosen such that for the corresponding delays a certain minimum time separation $T_d$ between neighboring delays, e.g. $T_d = 0.75T_c$ is assured. For the threshold calculation as proposed by E. Bejjani et al. as cited above, this would mean that those multipath components which are separated less than $T_d$ from the $L_d$ strongest paths would also have to be discarded from the estimated power delay profile before the calculation of $m_{z,noise}$ and $\sigma_{z,noise}$, which would increase the complexity of that threshold setting even more. It is to be noted that this case is not discussed by E. Bejjani et al. as cited above, who do not consider an oversampling of the received signal and the local PN code.

According to the above explanations, the following steps may be performed in a path searcher 5 of a receiver structure 1 if the threshold is calculated according to the method described by E. Bejjani et al. as cited above: First, a power delay profile is estimated. In a second step, the $L_d$ strongest paths are discarded. In a third step, the neighbouring paths separated less than $T_d$ are discarded. In a fourth step, $m_{z,noise}$ and $\sigma_{z,noise}$ are calculated. In a fifth step, the L strongest paths from the $L_d$ strongest paths are chosen. Then, in a sixth step, except for the strongest path, all paths are discarded which do not exceed the threshold given by equation (4). The disadvantage of the threshold setting as described by E. Bejjani et al. is therefore that the power delay profile has to be swept several times, since the noise parameters have to be known and used for the calculation of the threshold. This leads to a high complexity of the receiver structure, particularly of the path searcher.

The object of the present invention is therefore to propose a receiver structure for a wireless communication device according to the preambles of claim 1 and 6 and a processing method for processing a received bit stream in a wireless communication device according to the preambles of claims 8 and 13, in which the threshold value can be calculated in a more simple and effective way.

This object is achieved by a receiver structure for a wireless communication device according to claim 1 or claim 8. The above object is further achieved by a processing method for processing a received bit stream in a wireless communication device according to claim 8 or claim 13.

The receiver structure for a wireless communication device according to claim 1 comprises a correlation means for correlating a received bit stream and for obtaining a delay profile of said received bit stream, selecting means for selecting at least one multipath component from said received bit stream on the basis of said obtained delay profile and for assigning each selected multipath component to a respective one of a number of receiver paths, in which the multipath components are further processed, and combining means for combining said processed multipath components output from said receiver paths, whereby said selecting means selects said number of multipath components on the basis of a threshold value calculated from said delay profile, characterised in that said selecting means calculates said threshold value on the basis of a mean value of the entire delay profile.

Therefore, according to the present invention, the threshold value $\vartheta$ is calculated on the basis of a statistic parameter of the entire delay profile and the step of discarding the Ld strongest paths from the delay profile as necessary in the above described prior art can be omitted. Thus, the present invention presents a more simple and effective way to calculate the threshold value so that the overall complexity of the receiver structure is reduced. Further, the present invention improves the performance of the receiver structure, since it allows for a higher weighting of the mean value in the threshold setting rule, which leads to an improved receiver performance in cases, in which the number of true transmission paths is smaller than the number of receiver paths over RAKE fingers.

Advantageously, the entire delay profile upon which the selecting means bases the calculation of the threshold value includes the multipath components corresponding to true transmission paths. Further advantageously, the threshold value is directly proportional to the mean value. Further advantageously, the delay profile is a mean delay profile calculated from a number of received delay profiles. In this case, received power delay profiles are measured several times and then an averaging step is performed. Further advantageously, the threshold value is calculated as $\vartheta = m_z(a+bK^c)$, $\vartheta$ being the threshold value, $m_z$ being the mean value, a, b and c being shaping parameters and K being the number of received delay profiles used to calculate the mean delay profile.

According to an alternative aspect of the present invention, the receiver structure for a wireless communication device according to claim 6 is proposed, which comprises correlation means for correlating a received bit stream and for obtaining the delay profile of said received bit stream, selecting means for selecting at least one multipath component from the received bit stream on the basis of the obtained delay profile and for assigning each selected multipath component to a respective one of a number of receiver paths, in which the multipath components are further processed, and combining means for combining the processed multipath components output from the receiver paths, whereby the selecting means selects the number of multipath components on the basis of a threshold value calculated from the delay profile, said delay profile being a mean delay profile calculated from a number of received delay profiles, characterised in, that the threshold value is calculated as $\vartheta = \sigma^2_y(a+bK^c)$, $\vartheta$ being the threshold value, $\sigma^2_y$ being an noise variance value of the delay profile, a, b and c being shaping parameters and K being the number of received delay profiles used to calculate the mean delay profile.

In any case, the shaping parameter a is advantageously larger than 1. Further advantageously, the shaping parameter c is in any case equal to -0.5.

Corresponding processing methods are defined in claims 8 and 13, whereby advantageous embodiments are claimed in the corresponding subclaims.

The present invention is further explained in more detail in the following description in relation to the enclosed drawings, in which

figure 1 shows the general construction of a receiver structure according to the present invention, and

figure 2 shows the path searcher of the receiver structure shown in figure 1 in more detail.

Figure 1 shows the general construction of a receiver structure 1 for a wireless communication device according to the present invention. The general construction of a receiver structure 1 as shown in figure 1 corresponds thereby to the general construction of receiver structures as known from the prior art, as explained above in the introduction of the present description. The receiver structure 1 shown in figure 1 is particularly adapted for use in a WCDMA telecommunication system. The general explanations of the functions and the features of the elements of the receiver structure 1 explained above also apply to the receiver structure of the present invention, whereby the main difference between the prior art and the present invention lies in the calculation of the threshold value performed in the path searcher 5.

The receiver structure 1 for a wireless communication device, as e.g. for a mobile station of a WCDMA telecommunication system, comprises an antenna 2 for receiving signals, e.g. from a base station of the communication system. The received signals are supplied to an analog frontend 3, which downconverts the received signals into the baseband. The downconverted data output from the analog frontend 3 are supplied to an analog-to-digital converter 4, which digitizes the downconverted data and supplies the resulting bit stream to L receiver paths or fingers 6a to 6l. The digitized bit stream from the analog-to-digital converter is also supplied to the path searcher 5, which estimates a power delay profile of the received data and sets the respective delays for the receiver paths 6a to 6l so that in each receiver path or finger 6a to 6l the multipath component corresponding to the respective delay can be further processed. The outputs from the receiver paths 6a to 6l are combined in a combiner 7 and then supplied to further processing units of the receiver. The function of the different units comprised in the receiver structure 1 of the present invention, except the path searcher 5, correspond to the known receiver structure which has been explained in the introduction of the present application, so that the corresponding explanation is omitted.

Figure 2 shows a block diagram of a detailed structure of the path searcher 5 of the receiver structure 1 according to the present invention. The path searcher 5 comprises a delay profile estimation means 8 and a path selection means 9. The delay profile estimation means 8 comprises a correlation means for correlating the received and downconverted bit stream from the analog-to-digital converter 4 and for obtaining a delay profile of said bit stream. The delay profile is thereby obtained in the manner described above, e.g. by measuring the delay profile several times and averaging over the number of delay profiles to obtain a mean delay profile. The delay profile estimation means 8 is e.g. realised in dedicated hardware.

The path selection means 9 selects at least one multipath component from the received bit stream on the basis of the delay profile obtained in the correlation means 8 and for assigning each selected multipath component to a respective one of the number of receiver paths 6a to 6l, in which the multipath components are further processed. As explained above, the further processing in each of the receiver paths or RAKE fingers 6a to 6l comprises a further cross-correlation or despreading and eventually a descrambling of the respective multipath component. The outputs from the receiver paths 6a to 6l are combined in a combiner 7.

The selecting means 9 selects the number of multipath components to be assigned to each of the receiver paths 6a to 6l on the basis of a threshold value calculated from the delay profile, whereby the threshold value is calculated on the basis of a mean value of the entire delay profile. Thereby, the entire delay profile upon which the selecting means 9 bases the calculation of the threshold value includes the multipath components corresponding to two transmission paths.

Thus, the receiver structure 1 and the processing method according to the present invention avoid the drawbacks of the threshold settings as proposed in the prior art and at the same time, provide for a more effective threshold setting, thus leading to a better performance of the entire receiver. The mathematical background of the threshold setting according to the present invention is explained in the following.

Let $m_z$ and $\sigma_z$ denote the mean and the variance value of all multipath components $z_n$, respectively. Usually, the total number of multipath components is much larger than the number of multipath components, which correspond to true transmission paths. In this case, $m_z$ is only slightly larger than $m_{z,noise}$, whereas the difference between $\sigma_z$ and $\sigma_{z,noise}$ is of course significant. For a central chi-square random variable x=

$$\sum_{k=1}^{2K} w^2$$

with 2K degrees of freedom, K is the number of delay profiles used for obtaining the mean delay profile and 2 because of the complex values, the standard deviation is given by

$$\sigma_x = 2\sqrt{K}\,\sigma^2 \tag{5}$$

where $\sigma$ is the standard deviation of the 2K independent real-valued Gaussian random variables w (cf. J. Proakis, Digital Communications, 3rd edition, McGraw-Hill, 1995). Therefore, the standard deviation $\sigma_{z,noise}$ of the noise-only multipath component is related to their mean value $m_{z,noise}$ by

$$\sigma_{z,noise} = \frac{1}{\sqrt{K}}\sigma^2_y = \frac{1}{\sqrt{K}}m_{z,noise} \tag{6}$$

where equation (2) has been used for the case a(n) = 0 to obtain the expression on the right side of equation (6). Thus, the threshold given by equation (4) can be simplified to

$$\vartheta = m_{z,noise}\left(1+\frac{y}{\sqrt{K}}\right) \tag{7}$$

since the difference between $m_z$ and $m_{z,noise}$ is negligible, $m_{z,noise}$ can be replaced by $m_z$ in equation (7), which yields the following expression for the proposed threshold setting

$$\vartheta = m_z\left(1+\frac{y}{\sqrt{K}}\right). \tag{8}$$

Thus, this threshold $\gamma$ does not require any additional loop over all multipath components like it was necessary in the state of the art according to equation (4), and it does not require the computation of the standard deviation at all. Moreover, a more general threshold rule is proposed by the following equation

$$\vartheta = m_z(a+bK^c) \tag{9}$$

where a, b and c are design parameters. For example, the threshold according to equation (8) would correspond to the following values a=1, c=-0.5 and b=$\gamma$. Especially, it is proposed to chose parameter a to be larger than 1, because simulations have shown that this leads to an even more effective discarding of noise-only multipath components and thus to a better performance and a reduced complexity of the receiver structure 1 as compared to the setting of a=1. It is to be noted that the more general threshold according to equation (9) has the same low computational complexity as the threshold setting according to equation (8). It is also proposed to chose the delay corresponding to the strongest multipath component $z_{max}$ in any case to ensure that at least one multipath component is chosen and assigned to one of the receiver paths or fingers 6a to 6l.

Moreover, the proposed threshold rules according to equation (8) and (9) can be more easily combined with the rule ensuring a certain minimum time separation between chosen multipath components than the threshold as proposed by E. Bejjani et al. According to the present invention, the following steps are performed in the path searcher unit 5 of the receiver structure 1 of the present invention. The first step is to estimate the power delay profile in the delay profile estimation means 8. The second step is to chose the L strongest paths with a minimum time separation $t_d$ (in case that the samples are to close together so that a risk of a correlation exists) and calculate $m_z$ in the path selection means 9. The third step is to discard the paths which do not exceed the threshold value according to equation (9), except for the strongest paths. The third step is also performed in the path selection means 9.

According to an alternative aspect of the present invention, equation (2) can be used for the case a(n)=0, and a threshold setting

$$\vartheta = \sigma^2_y(a+bK^c) \tag{10}$$

can be used in case that the variance $\sigma^2_y$ of the additive noise is already known from some other unit of the receiver. In that case, even the calculation of the mean value can be omitted so that the entire receiver structure 1 can be made even less complex. In this case, the power delay profile is estimated in the delay profile estimation means 8, then the L strongest path with minimum time separation $T_d$ are chosen in the path selection means 9. Then, the paths are discarded, which do not exceed the threshold value as given by equation (10), except for the strongest path.

The major advantage of the present invention is a reduction of complexity of the receiver structure 1, since the additional loop to determine the $L_d$ strongest paths which have to be discarded in order to be able to compute the mean and the standard deviation of the noise-only paths in the prior art described by E. Bejjani et al. can be avoided. Further, the performance of the receiver structure 1 can be significantly improved. Allowing for a higher waiting of the mean value in the threshold rule leads to an improved receiver performance in cases, in which a number of true transmission paths is smaller than the number of receiver paths or RAKE fingers.

**Claims**

1. Receiver structure (1) for a wireless communication device, comprising

    correlation means (8) for correlating a received bitstream and for obtaining a delay profile of said received bitstream,
    selecting means (9) for selecting at least one multipath component from said received bitstream on the basis of said obtained delay profile and for assigning each selected multipath component to a respective one of a number of receiver paths (6a to 61), in which the multipath components are further processed, and
    combining means (7) for combining said processed multipath components output from said receiver paths, whereby said selecting means (9) selects said number of multipath components on the basis of a threshold value calculated from said delay profile,

    **characterized in,**
    that said selecting means (9) calculates said threshold value on the basis of a mean value of the entire delay profile.

2. Receiver structure (1) for a wireless communication device according to claim 1,
    **characterized in,**
    that the entire delay profile upon which the selecting means (9) bases the calculation of said threshold value includes the multipath components corresponding to true transmission paths.

3. Receiver structure (1) for a wireless communication device according to claim 1 or 2,
    **characterized in,**
    that the threshold value is directly proportional to said mean value.

4. Receiver structure (1) for a wireless communication device according to claim 1, 2 or 3,
    **characterized in,**
    that said delay profile is a mean delay profile calculated from a number of received delay profiles.

5. Receiver structure (1) for a wireless communication device according to claim 4,
    **characterized in,**
    that the threshold value is calculated as $\vartheta = m_z(a+bK^c)$, $\vartheta$ being said threshold value, $m_z$ being said mean value, a, b and c being shaping parameters and K being the number of received delay profiles used to calculate said mean delay profile.

6. Receiver structure (1) for a wireless communication device, comprising

    correlation means (8) for correlating a received bitstream and for obtaining a delay profile of said received bitstream,
    selecting means (9) for selecting at least one multipath component from said received bitstream on the basis of said obtained delay profile and for assigning each selected multipath component to a respective one of a number of receiver paths (6a to 61), in which the multipath components are further processed, and
    combining means (7) for combining said processed multipath components output from said receiver paths, whereby said selecting means (9) selects said number of multipath components on the basis of a threshold value calculated from said delay profile, said delay profile being a mean delay profile calculated from a number of received delay profiles,

    **characterized in,**

that the threshold value is calculated as $\vartheta=\sigma_y{}^2(a+bK^c)$, $\vartheta$ being said threshold value, $\sigma_y$ being a noise variance value, a, b and c being shaping parameters and K being the number of received delay profiles used to calculate said mean delay profile.

7.  Receiver structure (1) for a wireless communication device according to claim 5 or 6,
    **characterized in,**
    that a > 1 and c = -0.5.

8.  Processing method for processing a received bitstream in a wireless communication device, comprising the steps of

    correlating a received bitstream,
    obtaining a delay profile of said received bitstream,
    selecting at least one multipath component from said received bitstream on the basis of said obtained delay profile,
    assigning each selected multipath component to a respective one of a number of receiver paths, in which the multipath components are further processed, and
    combining said processed multipath components output from said receiver paths, whereby said number of multipath components is selected on the basis of a threshold value calculated from said delay profile,

    **characterized in,**
    that said threshold value is calculated on the basis of a mean value of the entire delay profile.

9.  Processing method for processing a received bitstream according to claim 8,
    **characterized in,**
    that the entire delay profile upon which the calculation of said threshold value is based includes the multipath components corresponding to true transmission paths.

10. Processing method for processing a received bitstream according to claim 8 or 9,
    **characterized in,**
    that the threshold value is directly proportional to said mean value.

11. Processing method for processing a received bitstream according to claim 8, 9 or 10,
    **characterized in,**
    that said delay profile is a mean delay profile calculated from a number of received delay profiles.

12. Processing method for processing a received bitstream according to claim 11,
    **characterized in,**
    that the threshold value is calculated as $\vartheta=m_z(a+bK^c)$, $\vartheta$ being said threshold value, $m_z$ being said mean value, a, b and c being shaping parameters and K being the number of received delay profiles used to calculate said mean delay profile.

13. Processing method for processing a received bitstream in a wireless communication device, comprising the steps of

    correlating a received bitstream,
    obtaining a delay profile of said received bitstream,
    selecting at least one multipath component from said received bitstream on the basis of said obtained delay profile,
    assigning each selected multipath component to a respective one of a number of receiver paths, in which the multipath components are further processed, and
    combining said processed multipath components output from said receiver paths, whereby said number of multipath components is selected on the basis of a threshold value calculated from said delay profile, said delay profile being a mean delay profile calculated from a number of received delay profiles,

    **characterized in,**
    that the threshold value is calculated as $\vartheta=\sigma_y{}^2(a+bK^c)$, $\vartheta$ being said threshold value, $\sigma_y$ being a noise variance value, a, b and c being shaping parameters and K being the number of received delay profiles used to calculate said mean delay profile.

**14.** Processing method for processing a received bitstream according to claim 12 or 13, **characterized in,** that a > 1 and c = -0.5.

Fig. 1

Fig. 2

**European Patent Office**

**EUROPEAN SEARCH REPORT**

Application Number

EP 00 10 3984

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1998, no. 12, 31 October 1998 (1998-10-31) & JP 10 190522 A (N T T IDO TSUSHINMO KK), 21 July 1998 (1998-07-21) | 1,8 | H04B1/707 |
| A | * abstract * | 2-7,9-14 | |
| D,A | BEJJANI E ET AL: "Adaptive channel delays selection for WCDMA mobile system" GATEWAY TO 21ST CENTURY COMMUNICATIONS VILLAGE. VTC 1999-FALL. IEEE VTS 50TH VEHICULAR TECHNOLOGY CONFERENCE (CAT. NO.99CH36324), GATEWAY TO 21ST CENTURY COMMUNICATIONS VILLAGE. VTC 1999-FALL. IEEE VTS 50TH VEHICULAR TECHNOLOGY CONFERENCE, AMSTERDAM,, pages 203-207 vol.1, XP002142901 1999, Piscataway, NJ, USA, IEEE, USA ISBN: 0-7803-5435-4 * abstract * * page 204, column 2, line 7 - page 206, column 1, line 5 * | 1-14 | |
| D,A | FUKUMOTO S ET AL: "MATCHED FILTER-BASED RAKE COMBINER FOR WIDEBAND DS-CDMA MOBILE RADIO" IEICE TRANSACTIONS ON COMMUNICATIONS,JP,INSTITUTE OF ELECTRONICS INFORMATION AND COMM. ENG. TOKYO, vol. E81-B, no. 7, 1 July 1998 (1998-07-01), pages 1384-1390, XP000790171 ISSN: 0916-8516 * abstract * * page 1384, column 1 - page 1386, column 2, line 5 * | 1-14 | TECHNICAL FIELDS SEARCHED (Int.Cl.7) H04B |

-/--

The present search report has been drawn up for all claims

| Place of search | Date of completion of the search | Examiner |
|---|---|---|
| THE HAGUE | 19 July 2000 | Ó Donnabháin, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 1 128 563 A1

<table>
<tr><td></td><td colspan="2">**European Patent Office**</td><td colspan="2">**EUROPEAN SEARCH REPORT**</td><td colspan="2">**Application Number**<br>EP 00 10 3984</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 945 995 A (SONY CORP) 29 September 1999 (1999-09-29) * abstract * * page 7, line 46 – page 8, line 20 * | 1-14 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 19 July 2000 | Ó Donnabháin, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**    EP 00 10 3984

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2000

| Patent document cited in search report | Publication date | Patent family member(s) | Publication date |
|---|---|---|---|
| JP 10190522 A | 21-07-1998 | NONE | |
| EP 0945995 A | 29-09-1999 | JP 11274982 A<br>CN 1234656 A | 08-10-1999<br>10-11-1999 |